# EUROPEAN PATENT SPECIFICATION

(11) **EP 1 224 759 B1**
(45) Date of publication and mention of the grant of the patent: **16.03.2005**
(21) Application number: 00990600.9
(22) Date of filing: 17.10.2000
(51) Int. Cl.: H04J 3/08, H04J 3/14, H04L 12/42, H04Q 11/04

(54) **SIGNALLING OF FAILURES IN TELECOMMUNICATION NETWORKS**
SIGNALISIERUNG VON FEHLERN IN NACHRICHTENÜBERTRAGUNGSNETZWERKEN
SIGNALISATION DE PANNES DANS DES RESEAUX DE TELECOMMUNICATION

(30) Priority: 29.10.1999 IT TO990945
(43) Date of publication of application: 24.07.2002
(73) Proprietor: ALCATEL, 75008 Paris (FR)
(72) Inventor: BIANCHI, Lucia, I-20133 Milano (IT); COLIZZI, Ernesto, I-20052 Monza (IT); VALVO, Gaetano, I-20161 Milano (IT)
(74) Representative: Menzietti, Domenico
(86) International application number: PCT/EP2000/011244
(87) International publication number: WO 2001/031821

(56) References cited:
- EP-A- 0 804 001
- EP-A- 0 818 940
- EP-A- 0 928 083
- JP-A- 9 036 824
- US-A- 5 870 382
- ITU-T RECOMMENDATION G.841, October 1998 (1998-10), XP002166029 cited in the application

## Description

The present invention relates to a method for signaling failures in telecommunications networks, particularly in MS-SPRING optical fiber telecommunications networks. Such networks comprise nodes connected through spans. The information traffic in said networks is protected by defining a working channel and a protecting channel and switch operations between said working and protecting channels; the switch operations are driven through protection words being exchanged between the nodes of said telecommunications network.

In present telecommunications networks it has become extremely important to have the capability of making up for the failures occurring in the networks without causing any impact on the operation functionality.

Therefore, telecommunications networks, in particular optical fiber networks, are provided with protecting means against failures of network elements or spans.

MS-SPRING (Multiplexed-Shared Protection Ring) networks, for example, have implemented a shared protection mechanism, which allows automatic traffic restoration also in the event of failures in the connecting fiber.

MS-SPRING networks provide for automatic traffic restoration through a synchronized rerouting of said traffic, which is operated at each ring node. This operation is controlled by a protocol consisting of 16-bit patterns, which are continuously exchanged between adjacent nodes. For obtaining more information about said protocol and the operations involved by it in relation to different bit patterns see for instance the current approved version of ITU-T G. 841.

Standards define two MS-SPRING network types, one for two fiber rings, namely each ring node is connected to another node by a span consisting of two optical fibers, which carry signals spreading in opposite directions to each other; the other for four fiber rings, capable of carrying a higher traffic.

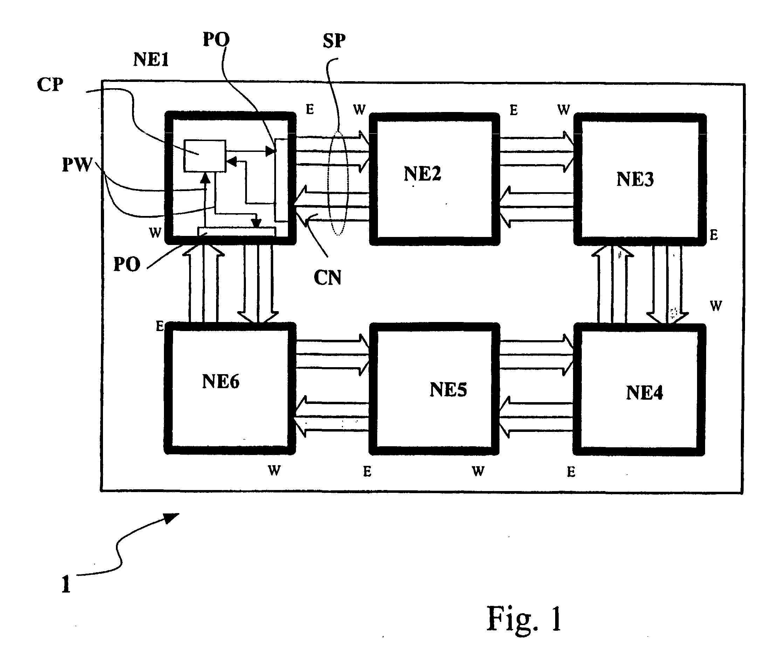

Fig. 1 represents a basic schematics of a network ring 1 of an MS-SPRING two fiber network. Such a ring 1 comprises six nodes or network elements NE. Generally, network elements NEs in an MS-SPRING ring may range from 2 to 16. Each network element NE has two bi-directional communication ports PO, i.e. each port operating both as a transmission and reception port. One of the communication ports PO is dedicated to the traffic transmitted in clockwise (or East) direction E, whereas the other is dedicated to the traffic transmitted in counterclockwise (or West) direction W.

Two adjacent network elements NE in the ring 1 are connected through a corresponding span SP, which span SP comprises two connections CN. Each connection comprises an optical fiber which carry the traffic in opposite directions, namely one in clockwise direction E, the other one in counterclockwise direction W.

In order to obtain traffic protection without too much impact on the band utilization. the bandwidth in the MS-SPRING network ring 1 is divided in two halves of equal capacity, called working capacity (or working channel) and protecting capacity (or protecting channel). In Fig. 1 they are identified by arrows of different colors, grey and white, which represent the connections CN. The working channel is used for high priority (HP) traffic (namely, protected traffic), whereas the protecting channel is used for low priority (LP) traffic, namely a traffic that can be lost in the event of a failure.

Protection in the MS-SPRING network ring 1 is implemented through a so-called "Bridge & Switch" technique, which technique comprises the step of re-routing the traffic through an appropriate modification of the internal connections of the network elements, i.e. transferring the traffic from the working channel to the protecting channel, on which protecting channel the traffic is sent in a direction opposite to the direction of the original path.

A Bridge operation will substantially let a node transmit the same traffic on both the working channel and protecting channel, whereas a Switch operation will select the traffic transmitted on the protecting channel instead of the traffic transmitted on the working channel.

Such a protection technique, called APS (Automatic Protection Switch) requires for each network element to have inside a device called APS controller, which is capable of detecting failures, communicating and receiving information related to the other network elements and actuating Bridge & Switch operations.

Fig. 1 indicates a protection controller CP inside the node NE1, i.e. an APS controller, which exchanges protection words PW with the other network elements NE. Said protection words PW are commonly called bit patterns and consist of two signaling bytes, a first byte K1 and a second byte K2. Each protection controller CP contained in a network element NE is apt to interpret and write them according to the events occurring in the ring 1.

As it is known, MS-SPRING network ring state can be modified by two kinds of event. The first event corresponds to network failures, which in their turn may be either Signal Degrade failures or Signal Fail failures. The second event corresponds to the commands by an operator superintending to the operation. Said controls may be:
- Manual Switch;
- Forced Switch;
- Lockout Of Working Channel; and
- Lockout Of Protection Span.

The present invention deals with the Lockout Of Working Channel command, whereas for the description of the other commands reference is made to the above standard.

A Lockout Of Working Channel command which is sent by the operator hinders the node that receives said control to perform a switching operation of the protecting channel. The node can not request a protection Switch of any type, even if a failure should occur on a span. Should any traffic already be under protection, the relevant Bridge will be suppressed independently from the conditions of the working channel.

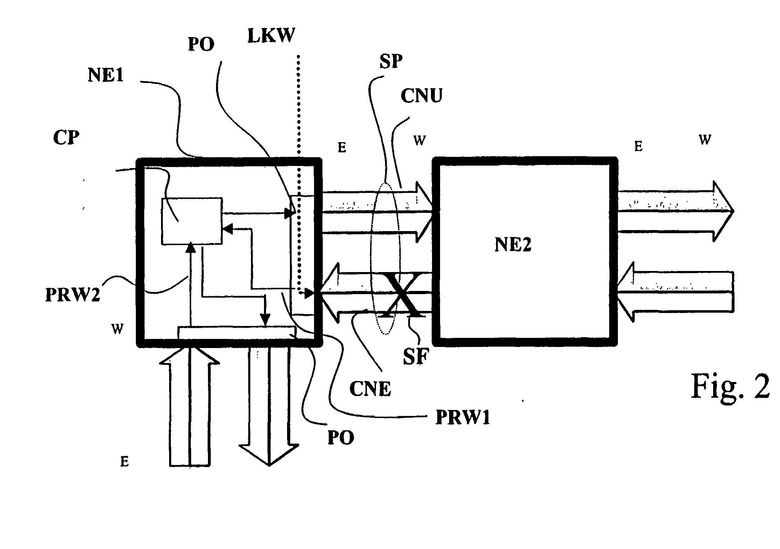

Fig. 2 represents a more detailed diagram of a portion of the ring 1 shown in Fig. 1 under a special operating condition, so as to describe a drawback of the known state of the art.

According to this particular operating condition, it is assumed that a Signal Fail (SF) failure occurs in a connection CNE entering the node NE1 in the direction E, corresponding for example to a real break of the relevant optical fiber (span failure).

As a result, according to the current MS-SPRING protocols, a protection procedure is activated on the node NE1, which provides for the node NE1 to become a Switch node and send requests for actuating a Bridge operation in both directions, namely on the short path (West direction from node NE1), and on the long path (East direction from the node NE1). The node NE2 receives a Bridge request on the short path and will correspondingly send a reverse request to the node NE1 on the short path itself; therefore, the node NE2, upon reception of a Bridge request from the long path, will perform a Bridge & Switch operation, i.e. rerouting the traffic on the protecting channel and on the long path. The node NE1, upon reception of a reverse request from the long path will perform in its turn a Bridge & Switch operation for the completion of the protecting operation.

However, if upon completion of the protecting operation the operator sends a Lockout Of Working Channel (LKW) command to the node NE1 in the direction of the connection CNE where the above failure has occurred, this will hinder the node NE1 from maintaining the Switch operation.

The node NE1 is kept informed on the status of its connection CNU resulting from the protection bit patterns, i.e. the protection words PW mentioned with reference to Fig. 1, namely from protection words PRW1 received by the incoming connection CNE from the same side, i.e. direction E (short path) and from protection words PRW2, received by the incoming connection CN from the opposite side, i.e. direction W (long path). In the instance shown in Fig. 2, the protection words PRW1 coming from the same side where failure has occurred, i.e. the short path, are not available because of the incoming connection CNE has a failure by assumption. Protection words PRW2 coming from the opposite side, i.e. the long path, are available but the information they carry is a combination of the status of the exiting connection CNU and incoming connection CNE, i.e. they indicate a failure if at least one of both connections CN has failed (without any possibility of understanding whether both connections have a failure); therefore, since the incoming connection CNE has a failure by assumption, no useful information about the state of the exiting connection CNU can be obtained, not even from the protection word PRW2 received from the opposite side.

If no lockout command of the working channel LKW is issued, the above situation has no influence since, according to MS-SPRING protocols, the node NE1 should behave in the same way, either in the event that only the incoming connection CNE has failed or that both the incoming connection CNE and exiting connection CNU have a failure; consequently, it is of no interest to know the state of the exiting connection CNU when the incoming connection CNE has a failure. On the contrary, when a lockout command LKW is given by the operator to the working channel, in which case the node NE1 is requested to ignore the state of the entering connection CNE only, the node NE1 should know the state of the exiting connection CNU, since its behavior depends on that status.

Serious drawbacks are caused by the above situation. In fact, if the failure SF is only on the exiting connection CNE, i.e. unidirectional incoming, in the event of a lockout command of the working channel LKW, the protocol provides as above for suppression of the switch between the working channel and protecting channel, whereas in the event that such a failure SF also affects the exiting connection CNU of one same span SP (ring switch), the protocol imposes to leave the traffic unchanged also in the event of a lockout command of the working channel LKW, i.e. to maintain the switch between the working channel and protecting channel.

Since the node NE1 has no way to know the state of the exiting connection CNU in the direction of the node NE2, its protection controller CP implementing APS protection is in an uncertainty situation and will initially attempt to suppress the Switch and subsequently restore it. In the event of a failure, this appears like an undesired transient.

In EP-A-0 804 001 a self-healing network is disclosed. The transmission equipment comprises an APS byte transmiter/receiver for exchanging information on failures with adjacent transmission equipment through a protection line, a monitor for monitoring anomalies on a plurality of the working lines, a network table for storing data indicating network structure, a processing unit for determining working lines to be switched based on the data stored in the network table and for processing APS bytes.

In ITU-T Recommendation G.841, October 1998 (1998-10) types and characteristics of SDH network protection architectures are disclosed. Protected entities may range from a single SDH multiplex section, to a portion of an SDH end-to-end path, or to an entire SDH end-to-end path. Physical implementations of these protection architectures may include rings or linear chains of nodes. A protection switch protocol may include two APS bytes, K1 and K2, which shall be used for protection switching. Bytes K1 and K2 shall be transmitted within the multiplex section overhead of the STM-N that is carrying the protection channels. APS bytes shall be accepted as valid only when identical bytes are received in three consecutive frames.
It is the main object of the present invention to solve the above drawbacks and provide a method for signaling failures in MS-SPRING telecommunications networks, having a more efficient and improved performance which is able to avoid the above undesired transients of the protection controllers in the event of a lockout command of the working channel.

The above and further objects are obtained by a method according to independent claim 1, a network element according to claim 7, a network according to claim 11 and a frame according to claim 12. The respective dependent claims set forth advantageous characteristics of the present invention. All the claims are considered as an integral part of the present description.

The basic idea of the present invention consists in the step, carried out by a network element receiving a Signal Fail signaling on an incoming span and being in a Lockout Of Working Channel state, of sending proper protection words in opposite directions through the ring network.

Further objects, features and advantages of the present invention will become apparent from the following detailed description and annexed drawings, which are supplied by way of non limiting example, wherein:
- Fig. 1 shows a basic schematic diagram of an MS-SPRING telecommunications network;
- Fig. 2 shows a detail of the MS-SPRING telecommunications network of Fig. 1 in a failure situation;
- Fig. 3 shows a failure signaling string, which provides the method for signaling failures in telecommunications networks, according to the present invention; and
- Fig. 4 shows a time diagram of the MS-SPRING network in the failure situation of Fig. 2, using the method for signaling failures in telecommunications network according to the present invention.

As above mentioned, the protection word according to ITU-T G. 841 comprises two signaling bytes, a first byte K1 and a second byte K2. The first byte K1 contains two fields of four bits. The first field of K1 (BRQ) contains the Bridge request code. The second field of K1 (DNI) contains the information indicating which node NE should accept the request (namely, DNI is the identification of destination node). The second byte K2 contains three fields. The first field of K2 is a four bit field (SNI) containing the identification of the node NE that has generated the request (namely, SNI is the identification of source node). The second field of K2 is a one-bit field (LS) containing the path information (Long or Short). Finally, the third field of K2 (ST) contains the information of the node status. The third field of K2 is a three bit field. ITU-T G.841 sets forth possible values of the first field of K1 (BRQ) and the third field of K2 (ST).

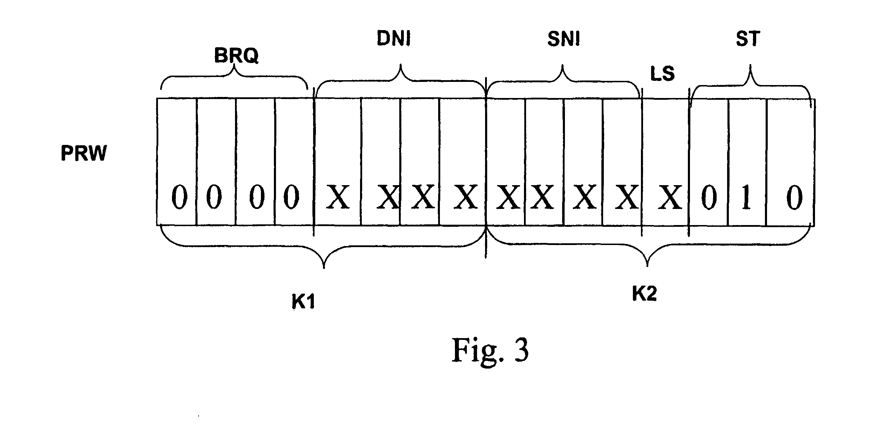

Fig. 3 represents a possible protection word PRW according to the present invention. Such a "modified" (or proper) protection word PRW is in fact a modification of the protection words PW previously described, i.e. the instruction sent to the protection controllers CP located inside the nodes (NE1... NE6) of Fig.1 implementing APS protection. It should be understood that the PRW according to the present invention has the same field arrangement of the known PRW, the modification being in the values of BRQ and ST fields as below explained.

The method for signaling failures according to the present invention comprises the step of notifying the special condition of the node NE1 to the node NE2 of Fig. 2 (adjacent to the node NE1) which receives the Locking Of Working Channel command, without interfering with the currently installed traffic. The above step comprises the step, carried out by NE1, of sending the modified protection word PRW to NE2. The bit arrangement of the modified (namely, property coded) protection word PRW identifies a combination not assigned by the above standard defining the MS-SPRING protocol, but conventionally indicating anyway the particular condition of the node NE1.

The node NE2, which has become aware of the special situation notified by the node NE1 through this property coded protection word PRW, has all the required information for deciding whether to suppress the Switch, should only the incoming connection CNE to the node NE1 be affected by a failure (span NE1-NE2 affected by a span failure), or maintain the Switch should the exiting connection CNU have a failure (ring failure of span NE1-NE2).

The preferred embodiment of the modified protection word according to the present invention is shown in Fig. 3. The invention arrangement is obtained by inserting four zeros in the second field (BRQ) of the first byte K1 sent on the long path, whereas the third field (ST) of the second byte K2 is written with the Bridge & Switch signaling coding, namely, binary 010. Therefore, the protection controller CP of the node NE2, which receives such a modified protection word PRW is conveniently programmed for recognizing such a combination received by the node NE1.

Now the node NE2, being aware of the connection state CN exiting the node NE1 and entering the node NE2 through the protection word PRW that has reached the protection controller CP, may decide through the same protection controller CP whether to suppress the switch or not.

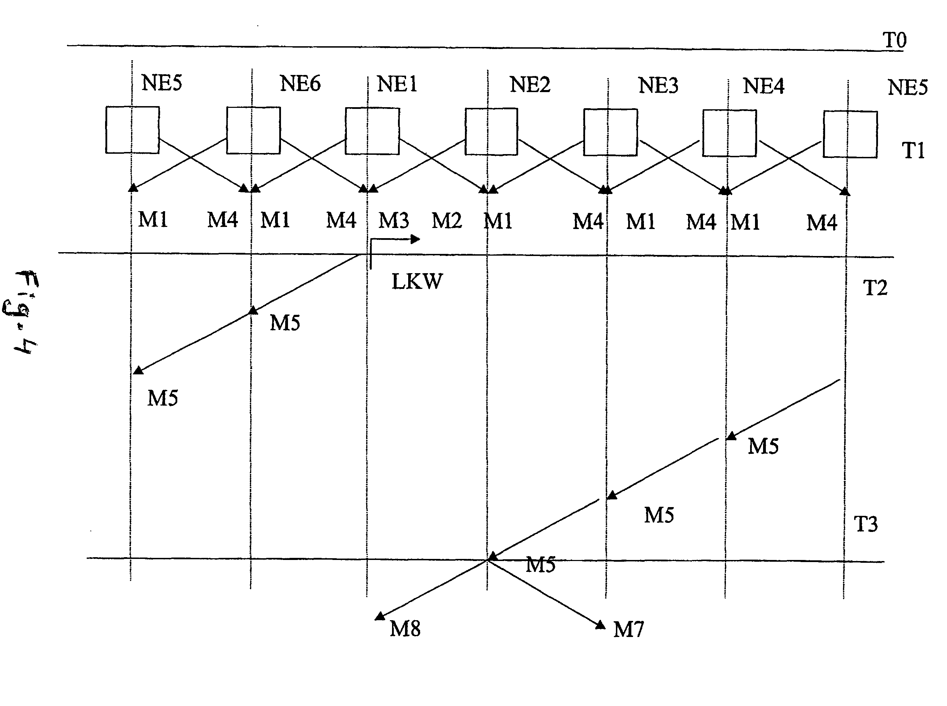

Fig. 4 shows a time evolution diagram of the ring 1 in the condition of Fig. 2, namely with a span failure SF affecting the connection CNE entering the node NE1, which has presumably occurred in the instant T0.

The diagram is representing the protection words PRW being exchanged by the APS controllers of the various nodes NE. In the diagram, the protection words are represented through messages M, i.e. bit patterns or protection words PW. The protection words have the format BRQ/DNI/SNI/LS/ST previously illustrated for the protection words.

Said messages M are:
M1: Signal Fail Ring/2/1/L/BS
M2: Signal Fail Ring/2/1/S/BS
M3: Reverse Request Ring/1/2/S/BS
M4: Signal Fail Ring/1/2/L/BS
M5: No Request/2/1/L/BS
M7: No Request/1/2/L/BR
M8: No Request/1/2/S/BR
where L = Long Path, S = Short Path, BS = Bridge & Switch, and BR = Bridge.

The message M5 corresponds to the modified protection word PRW.

The message M3 is the message not received by NE1 due to the failure SF.

At the time T1, standard messages M1, M4 are exchanged, i.e. standard protection words PW. As it can be seen, the modified protection word PRW corresponding to the message M5 is sent at the time T2 and will propagate through the nodes NE until it reaches the node NE2 at time T3. As it can be seen, the node NE2 removes the Switch (going over from BS to BR) at the time T3 through the transmission of the messages M7 and M8 on the long and short paths. The node NE2 will thus start the switch suppression procedure, since the failure SF is unidirectional. From this time on the protocol continues according to the usual suppression sequence established by the MS-SPRING networks standard as previously mentioned.

Should the failure SF has been a bi-directional one (ring switch), the message M7 would not have been transmitted due to the missing connection and both the messages M2, M4 transmitted by the node NE2 and message M5 transmitted by the node NE1 would have remained, without any impact on the protected traffic.

The present invention further comprises a telecommunication (SDH or SONET) frame comprising a first and a second signaling bytes (K1 and K2) able to signal a Lockout Of Working Channels state of a network element (NE1) to a further network element (NE2) adjacent to a failure. In a preferred embodiment, the first field (BRQ) of the first byte (K1) comprises four zeros (0000) while the third field (ST) of second byte (K2) comprises the Bridge and Switch coding (binary 010).

The present invention still further comprises a network element comprising means for processing and identifying telecommunication (SDH or SONET) frames comprising a first and a second signaling bytes (K1 and K2) able to signal a Lockout Of Working Channels state of a network element (NE1) to a further network element (NE2) adjacent to a failure. In a preferred embodiment, the first field (BRQ) of the first byte (K1) comprises four zeros (0000) while the third field (ST) of second byte (K2) comprises the Bridge and Switch coding (binary 010).

From the above description the feature of the present invention are dear and also its advantages will be dear.

The method for signaling failures in telecommunications networks according to the present invention advantageously allows to remove the transient that arises in the node protection controller that receives a failure signal on a fiber and, therefore, a Lockout Of Working Channels signal. Advantageously, in fact, due to the fact that the node is not capable of self managing, the failure situation is notified to the adjacent node, which provides in its place for managing the protection and in particular a suppression or maintaining the switch between the working channel and protecting channel.

It should be clear that the arrangement of Fig. 3 is one of the possible configurations of bytes. In other words, several different combinations of the fields of bytes K1 and K2 can also be utilized on both the long and short spans, provided they are not assigned to other functions, namely they are not standardized. In principle, also protection words comprising an already standardized coding (namely, a coding corresponding to a certain failure status) can be used for the purposes of the present invention. In this case, at least one bit (preferably one byte) of the corresponding telecommunications frame should be used for clarifying the different meaning of such protection words.

Finally, while the present invention has been shown and disclosed with specific reference to SDH synchronous signals, the above principles and considerations equally apply to other synchronous signals (SONET). For the purposes of this specification, any reference to SDH should be read in such a way as to include also SONET signals, unless otherwise indicated.

There have thus been shown and described a novel method, a novel network element, a novel network and a novel telecommunications frame which fulfill all the objects and advantages sought therefor. Many changes, modifications, variations and other uses and applications of the subject invention will, however, become apparent to those skilled in the art after considering the specification and the accompanying drawings which disclose preferred embodiments thereof.

## Claims

1. Method for signaling failures in a Multiplexed-Shared Protection Ring telecommunication network (1) comprising:
- a plurality of nodes or network elements (NE1, NE2,...NE6); and
- a plurality of fiber spans connecting the network elements (NE1, NE2,...NE6) in a ring configuration, the fiber spans comprising working channels and protecting channels,
the method comprising the step of protecting information traffic installed in said telecommunication network by carrying out Switch operations between said working and protecting channels, said Switch operations being driven through protection words (PRW) exchanged among the nodes (NE) of said telecommunication network,
**characterized by** the step, carried out by a node (NE1) receiving a Signal Fail (SF) signaling on an incoming span (SP) and being in a Lockout Of Working Channel (LKW) state, of sending property coded protection words (PRW) in opposite directions through the ring network (1) so as to signal the failure to the other network elements, wherein the step of sending properly coded protection words (PRW) comprises the step of sending protection words (PRW) requesting the node (NE2) adjacent to the node (NE1) that receives a Signal Fail (SF) signaling and transmits on the failured connection (CNE), to verify the failure that has occurred and to take a protecting action corresponding to the failure that has occurred.

2. Method according to claim 1, wherein said protection words comprise a four-bit Bridge Request Code (BRQ) field, **characterized in that** the step of sending property coded protection words (PRW) comprises the step of sending protection words (PRW) comprising an all zeros combination in said Bridge Request Code (BRQ) field.

3. Method according to claim 1, wherein said protection words comprise a three-bit Node Status (ST) field, **characterized in that** the step of sending properly coded protection words (PRW) comprises the step of sending protection words (PRW) comprising a bit combination corresponding to a Bridge & Switch signaling in the Node Status (ST) field.

4. Method according to claim 1, **characterized in that** the step of sending properly coded protection words (PRW) comprises the step of sending protection words (PRW) through the shorter path between the node (NE1) receiving the failure signal (SF) and the node (NE2) transmitting on the interrupted connection (ONE), by using the likely surviving connection (CNU).

5. Method according to claim 1, **characterized in that** the step of sending properly coded protection words (PRW) comprises the step of sending protection words (PRW) in the opposite direction to the one on which the Lockout Of Working Channel (LKW) is ope rating.

6. Network element (NE) of a Multiplexed-Shared Protection Ring optical fiber telecommunications network (1) comprising:
- a plurality ofnodes or network elements (NE1, NE2,...NE6); and
- a plurality of fiber spans connecting the network elements (NE1, NE2,...NE6) in a ring configuration, the fiber spans comprising working channels and protecting channels, the network element comprising Switch means for protecting an information traffic installed in said telecommunication network by carrying out Switch operations between said working and protecting channels, said Switch operations being driven through protection words (PRW) exchanged among the nodes (NE) of said telecommunication network, **characterized in that** it further comprises means for sending properly coded protection words (PRW) in opposite directions through the ring network (1) when the network element (NE1) receives a Signal Fail (SF) signaling on an incoming span (SP) and is in a Lockout Of Working Channel (LKW) state, wherein the means for sending properly coded protection words (PRW) comprise means for sending protection words (PRW) requesting the node (NE2) adjacent to the node (NE1) that receives a Signal Fail (SF) signaling and transmits on the failured connection (CNE), to verify the failure that has occurred and to take a protecting action corresponding to the failure that has occurred.

7. Network element according to claim 6, **characterized in that** it further comprises means for interpreting properly coded protection words (PRW) possibly received by any other network element (NE1, NE2,...NE6).

8. Network element according to claim 6, wherein said protection words comprise a four-bit Bridge Request Code (BRQ) field, **characterized in that** it further comprises means for sending properly coded protection words comprising an all zeros combination in said Bridge Request Code (BRQ) field.

9. Network element according to claim 6, wherein said protection words comprise a three-bit Node Status (ST) field, **characterized in that** it further comprises means for sending properly coded protection words comprising a bit combination corresponding to a Bridge & Switch signaling in the Node Status (ST) field.

10. Multiplexed-Shared Protection Ring telecommunication network (1) comprising: a plurality of nodes or network elements (NE1, NE2,...NE6); and a plurality of fiber spans connecting the network elements (NE1, NE2,...NE6) in a ring configuration, **characterized in that** at least one of the network elements is a network element according to any of claims 7-9.

11. Telecommunications frame for signaling failures in a Multiplexed- Shared Protection Ring telecommunication network according to the method of claim 1, comprising a first signaling byte (K1) and a second signaling byte (K2), the first and second signaling bytes (K1, K2) forming a protection word (PRW) for signaling failures in a telecommunication network, the first byte (K1) comprising four-bit Bridge Request Code (BRQ) field, the second byte (K2) comprising a three-bit Node Status (ST) field, **characterized in that** the Bridge Request Code (BRQ) field comprises an all zeros combination and the Node Status (ST) field comprises a bit combination corresponding to a Bridge & Switch signaling.

## Patentansprüche

1. Verfahren zum Signalisieren von Fehlern in einem gemultiplexten Nachrichtenübertragungsnetzwerk (1) mit gemeinsamem Schutzring, mit:
- einer Mehrzahl von Knoten oder Netzwerkelementen (NE1, NE2, ..., NE6); und
- einer Mehrzahl von Faserspannen, die die Netzwerkelemente (NE1, NE2, ..., NE6) in einer Ringkonfiguration verbinden, wobei die Faserspannen Arbeitskanäle und Schutzkanäle umfassen,
wobei das Verfahren den Schritt des Schützens von in dem Fernmeldenetzwerk installiertem Informationsverkehr durch Ausführen von Umschaltoperationen zwischen Arbeits- und Schutzkanälen umfasst, wobei die Umschaltoperationen durch Schutzwörter (PRW) getrieben werden, die zwischen den Knoten (NE) des Nachrichtenübertragungsnetzwerkes ausgetauscht werden,
**gekennzeichnet durch** den Schritt, ausgeführt von einem Knoten (NE1), der eine Signalausfallsignalisierung (SF) auf einer eintreffenden Spanne (SP) empfängt und sich in einem Arbeitskanal-Aussperren-Zustand (LKW) befindet, des Sendens von geeignet codierten Schutzwörtern (PRW) in entgegengesetzte Richtungen **durch** das Ringnetzwerk (1), um den Fehler den anderen Netzwerkelementen zu signalisieren, wobei der Schritt des Sendens von geeignet codierten Schutzwörtern (PRW) den Schritt des Sendens von Schutzwörtern (PRW) umfasst, die den Knoten (NE2), der zu dem Knoten (NE1) benachbart ist, der eine Signalausfallsignalisierung (SF) empfängt und der auf der fehlerhaften Verbindung sendet, auffordern, den aufgetretenen Fehler zu überprüfen und eine dem aufgetretenen Fehler entsprechende Schutzhandlung vorzunehmen.

2. Verfahren nach Anspruch 1, bei dem die Schutzwörter ein 4-Bit-Überbrückungsanforderungscode-Feld (BRQ) umfassen, **dadurch gekennzeichnet, dass** der Schritt des Sendens von geeignet codierten Schutzwörtern (PRW) den Schritt des Sendens von Schutzwörtem umfasst, die eine Kombination von lauter Nullen in dem Überbrückungsanforderungscode-Feld (BRQ)enthalten.

3. Verfahren nach Anspruch 1, bei dem die Schutzwörter ein 3-Bit-Knotenstatusfeld (ST) umfassen, **dadurch gekennzeichnet, dass** der Schritt des Sendens von geeignet codierten Schutzwörtern den Schritt des Sendens von Schutzwörtern (PRW) umfasst, die eine Bit-Kombination, die einer Überbrückungs- und Umschalt-Signalisierung entspricht, in dem Knotenstatusfeld (ST) umfassen.

4. Verfahren nach Anspruch 1, **dadurch gekennzeichnet, dass** der Schritt des Sendens von geeignet codierten Schutzwörtern (PRW) den Schritt des Sendens von Schutzwörtern (PRW) auf dem kürzeren Weg zwischen dem Knoten (NE1), der das Fehlersignal (SF) empfängt, und dem Knoten (NE2), der auf der unterbrochenen Verbindung (CNE) sendet, unter Verwendung der wahrscheinlich überlebenden Verbindung (CNU) umfasst.

5. Verfahren nach Anspruch 1, **dadurch gekennzeichnet, dass** der Schritt des Sendens von geeignet codierten Schutzwörtern (PRW) den Schritt des Sendens von Schutzwörtern (PRW) in entgegengesetzte Richtung zur derjenigen, auf der die Arbeitskanal-Aussperrung (LKW) wirkt, umfasst.

6. Netzwerkelement eines gemultiplexten Nachrichtenübertragungsnetzwerks (1) mit gemeinsamem Schutzring und optischen Fasern mit:
- einer Mehrzahl von Knoten oder Netzwerkelementen (NE1, NE2, ..., NE6); und
- einer Mehrzahl von Faserspannen, die die Netzwerkelemente (NE1, NE2, ..., NE6) in einer Ringkonfiguration verbinden, wobei die Faserspannen Arbeitskanäle und Schutzkanäle umfassen, das Netzwerkelement Umschaltmittel zum Schützen von in dem Nachrichtenübertragungsnetzwerk installierten Informationsverkehr durch Ausführen von Umschaltoperationen zwischen Arbeits- und Schutzkanal umfasst, wobei die Umschaltoperationen durch Schutzwörter (PRW) getrieben sind, die zwischen den Knoten (NE) des Nachrichtenübertragungsnetzwerkes ausgetauscht werden, **dadurch gekennzeichnet, dass** es ferner Mittel zum Senden von geeignet codierten Schutzwörtern (PRW) in entgegengesetzte Richtungen durch das Ringnetzwerk (1), wenn das Netzwerkelement (NE1) eine Signalausfallsignalisierung (SF) auf einer eintreffenden Spanne (SP) empfängt und in einem Arbeitskanal-Aussperrzustand (LKW) ist, umfasst, wobei die Mittel zum Senden von geeignet codierten Schutzwörtern (PRW) Mittel zum Senden von Schutzwörtern (PRW), umfassen, die den Knoten (NE2), der dem Knoten (NE1), der eine Signalausfallsignalisierung (SF) empfängt und auf der fehlerhaften Verbindung (CNE) sendet, benachbart ist, auffordern, den aufgetretenen Fehler zu überprüfen und eine dem aufgetretenen Fehler entsprechende Schutzhandlung vorzunehmen.

7. Netzwerkelement nach Anspruch 6, **dadurch gekennzeichnet, dass** es ferner Mittel zum Interpretieren von geeignet codierten Schutzwörtern (PRW) umfasst, die möglicherweise von einem beliebigen anderen Netzwerkelement (NE1, NE2, ..., NE6) empfangen werden.

8. Netzwerkelement nach Anspruch 6, bei dem die Schutzwörter ein 4-Bit-Überbrückungsanforderungscode-Feld (BRQ) umfassen, **dadurch gekennzeichnet, dass** es ferner Mittel zum Senden von geeignet codierten Schutzwörtem umfasst, die in dem Überbrückungsanforderungscode-Feld (BRQ) eine Kombination von lauter Nullen enthalten.

9. Netzwerkelement nach Anspruch 6, bei dem die Schutzwörter ein 3-Bit-Knotenstatus-Feld (ST) umfassen, **dadurch gekennzeichnet, dass** es ferner Mittel zum Senden von geeignet codierten Schutzwörtem umfasst, welche eine Bit-Kombination, die einer Überbrückungs- und Umschaltsignalisierung entspricht, in dem Knotenstatus-Feld (ST) umfassen.

10. Gemultiplextes Nachrichtenübertragungsnetzwerk (1) mit gemeinsamem Schutzring mit:
einer Mehrzahl von Knoten oder Netzwerkelementen (NE1, NE2, ..., NE6); und einer Mehrzahl von Faserspannen, die die Netzwerkelemente (NE1, NE2, ..., NE6) in einer Ringkonfiguration verbinden, **dadurch gekennzeichnet, dass** wenigstens eines der Netzwerkelemente ein Netzwerkelement nach einem der Ansprüche 7 bis 9 ist.

11. Nachrichtenübertragungsrahmen zum Signalisieren von Fehlern in einem gemultiplexten Nachrichtenübertragungsnetzwerk mit gemeinsamem Schutzring nach dem Verfahren nach Anspruch 1, der ein erstes Signalisierungsbyte (K1) und ein zweites Signalisierungsbyte (K2) umfasst, wobei erstes und zweites Signalisierungsbyte (K1, K2) ein Schutzwort (PRW) zum Signalisieren von Fehlern in einem Nachrichtenübertragungsnetzwerk bilden, wobei das erste Byte (K1) ein 4-Bit-Überbrückungsanforderungscode-Feld (BRQ) umfasst, das zweite Byte (K2) ein 3-Bit-Knotenstatus-Feld (ST) umfasst, **dadurch gekennzeichnet, dass** das Überbrückungsanforderungscode-Feld (BRQ) eine Kombination von lauter Nullen umfasst, und dass das Knotenstatus-Feld (ST) eine Bit-Kombination umfasst, die einer Überbrückungs- und Umschaltsignalisierung entspricht.

## Revendications

1. Procédé visant à signaler des pannes dans un Réseau de Télécommunication d'Anneau de Protection partagé par Multiplexage (1) comprenant :
- une pluralité de noeuds ou d'éléments de réseau (NE1, NE2, ... NE6) ; et
- une pluralité de portées de fibres connectant les éléments du réseau (NE1, NE2, ... NE6) dans une configuration d'anneau, les portées de fibre comprenant des canaux de fonctionnement et des canaux de protection,
ledit procédé comprenant l'étape consistant à protéger le trafic d'information installé dans ledit réseau de télécommunication en effectuant des opérations de commutation entre lesdits canaux de fonctionnement et de protection, lesdites opérations de commutation étant effectuées via des mots de protection (PRW) échangés entre les noeuds (NE) dudit réseau de télécommunication,
**caractérisé par** l'étape, effectuée par un noeud (NE1) recevant un Signalement d'Echec de Signal (SF) sur une portée entrante (SP) et étant dans un état de verrouillage du canal de fonctionnement (LKW), consistant à envoyer des mots de protection correctement codés (PRW) dans des directions opposées via le réseau d'anneau (1) de manière à signaler la panne aux autres éléments du réseau, dans lequel l'étape consistant à envoyer les mots de protection correctement codés (PRW) comprend l'étape consistant à envoyer les mots de protection (PRW) demandant au noeud (NE2) adjacent au noeud (NE1) qui reçoit un signalement d'échec de signal (SF) et transmet sur la connexion en panne (CNE), de vérifier la panne qui est intervenue et de prendre une mesure de protection correspondant à la panne qui est intervenue.

2. Procédé selon la revendication 1, dans lequel lesdits mots de protection comprennent un champ de Code de Demande de pont à quatre bits (BRQ), **caractérisé en ce que** l'étape consistant à envoyer des mots de protection correctement codés (PRW) comprend l'étape consistant à envoyer des mots de protection (PRW) comprenant une combinaison tout en zéros dans ledit champ de Code de Demande de pont (BRQ).

3. Procédé selon la revendication 1, dans lequel lesdits mots de protection comprennent un champ d'Etat de Noeud à trois bits (ST), **caractérisé en ce que** l'étape consistant à envoyer les mots de protection correctement codés (PRW) comprend l'étape consistant à envoyer les mots de protection (PRW) comprenant une combinaison de bits correspondants à un signalement de Pont & de Commutateur dans le champ d'Etat de Noeud (ST).

4. Procédé selon la revendication 1, **caractérisé en ce que** l'étape consistant à envoyer des mots de protection correctement codés (PRW) comprend l'étape consistant à envoyer des mots de protection (PRW) via le chemin le plus court entre le noeud (NE1) recevant le signal d'échec (SF) et le noeud (NE2) transmettant sur la connexion interrompue (CNE), en utilisant la connexion vraisemblablement survivante (CNU).

5. Procédé selon la revendication 1, **caractérisé en ce que** l'étape consistant à envoyer des mots de protection correctement codés (PRW) comprend l'étape consistant à envoyer des mots de protection (PRW) dans la direction opposée à celle sur laquelle fonctionne le Verrouillage du Canal de Fonctionnement (LKW).

6. Elément de réseau (NE) d'un réseau de télécommunication par fibres optiques à Anneau de Protection Partagé par Multiplexage (1) comprenant :
- une pluralité de noeuds ou d'éléments de réseau (NE1, NE2, ... NE6) ; et
- une pluralité de portées de fibre connectant les éléments de réseau (NE1, NE2, ... NE6) dans une configuration d'anneau, les portées de fibre comprenant les canaux de fonctionnement et les canaux de protection, l'élément de réseau comprenant un moyen de commutation destiné à protéger un trafic d'information installé dans ledit réseau de télécommunication en effectuant des opérations de commutation entre lesdits canaux de fonctionnement et de protection, lesdites opérations de commutation étant effectuées via des mots de protection (PRW) échangés entre les noeuds (NE) dudit réseau de télécommunication, **caractérisé en ce qu'**il comprend, en outre, un moyen pour envoyer les mots de protection correctement codés (PRW) dans des directions opposées via le réseau d'anneau (1) lorsque l'élément de réseau (NE1) reçoit un signal d'Echec de Signal (SF) sur une portée entrante (SP) et est dans un état de Verrouillage du Canal de Fonctionnement (LKW), dans lequel le moyen pour envoyer les mots de protection correctement codés (PRW) comprend un moyen pour envoyer les mots de protection (PRW) demandant au noeud (NE2) adjacent au noeud (NE1) qui reçoit un signalement d'Echec de Signal (SF) et transmet sur la connexion en panne (CNE), de vérifier la panne qui est intervenue et de prendre une mesure de protection correspondant à la panne qui est intervenue.

7. Elément de réseau selon la revendication 6, **caractérisé en ce qu'**il comprend, en outre, un moyen pour interpréter les mots de protection correctement codés (PRW) ayant pu être reçus par tout autre élément de réseau (NE1, NE2, ... NE6).

8. Elément de réseau selon la revendication 6, dans lequel lesdits mots de protection comprennent un champ de code Demande de Pont (BRQ) à quatre bits, **caractérisé en ce qu**'il comprend, en outre, un moyen pour envoyer des mots de protection correctement codés comprenant une combinaison tout en zéros dans ledit champ de Code Demande de Pont (BRQ).

9. Elément de réseau selon la revendication 6, dans lequel lesdits mots de protection comprennent un champ d'Etat de Noeud à trois bits (ST), **caractérisé en ce qu'**il comprend en outre, un moyen pour envoyer les mots de protection correctement codés comprenant une combinaison de bits correspondants à un Signalement de Pont & de Commutateur dans le champ d'Etat de Noeud (ST).

10. Réseau de télécommunication d'Anneau de Protection Partagé par Multiplexage (1) comprenant : une pluralité de noeuds ou d'éléments de réseau (NE1, NE2, ... NE6) ; et une pluralité de portées de fibre connectant les éléments de réseau (NE1, NE2, ... NE6) dans une configuration d'anneau, **caractérisé en ce qu**'au moins l'un des éléments de réseau est un élément de réseau selon l'une quelconque des revendications 7 à 9.

11. Cadre de télécommunication destiné à signaler des pannes dans un réseau de télécommunication d'Anneau de Protection Partagé par Multiplexage selon le procédé de la revendication 1, comprenant un premier octet de signalement (K1) et un deuxième octet de signalement (K2), le premier et le deuxième octets de signalement (K1, K2) formant un mot de protection (PRW) destiné à signaler les pannes d'un réseau de télécommunication, le premier octet (K1) comprenant un champ de Commande de Demande de Pont (BRQ) à quatre bits, le deuxième octet (K2) comprenant un champ d'état de noeud (ST) à trois bits, **caractérisé en ce que** le champ de Code Demande de Pont (BRQ) comprend une combinaison tout en zéros et le champ d'Etat de Noeud (ST) comprend une combinaison de bits correspondants à un signalement de Pont & de Commutateur.
